# EUROPÄISCHE PATENTSCHRIFT

(11) **EP 1 616 081 B1**
(45) Veröffentlichungstag und Bekanntmachung des Hinweises auf die Patenterteilung: **26.12.2007**
(21) Anmeldenummer: 05726207.3
(22) Anmeldetag: 16.03.2005
(51) Int. Cl.: F01D 5/30

(54) **LAUFSCHAUFEL, INSBESONDERE FÜR EINE GASTURBINE**
ROTOR BLADE, PARTICULARLY FOR A GAS TURBINE
AUBE MOBILE, NOTAMMENT POUR UNE TURBINE A GAZ

(30) Priorität: 29.03.2004 DE 102004015301
(43) Veröffentlichungstag der Anmeldung: 18.01.2006
(73) Patentinhaber: MTU Aero Engines GmbH, 80995 München (DE)
(72) Erfinder: ARRIETA, Hernan, Victor, 80805 München (DE)
(86) Internationale Anmeldenummer: PCT/DE2005/000471
(87) Internationale Veröffentlichungsnummer: WO 2005/095762

(56) Entgegenhaltungen:
- DE-C1- 19 603 388
- FR-A- 989 042
- US-A- 2 255 486
- US-A- 3 045 968
- US-A- 5 310 318
- US-A- 5 474 421

## Beschreibung

Die Erfindung betrifft eine Laufschaufel, insbesondere für eine Gasturbine, gemäß dem Oberbegriff des Patentanspruchs 1. Des weiteren betrifft die Erfindung eine Gasturbine gemäß dem Oberbegriff des Patentanspruchs 7.

Laufschaufeln von Gasturbinen werden an einem Rotor derselben, insbesondere an Rotorscheiben des Rotors, in der Regel über Schaufelfüße befestigt, wobei die Schaufelfüße in Ausnehmungen innerhalb des Rotors bzw. der Rotorscheiben eingreifen. Die Innenkontur der Ausnehmungen entspricht dabei der Außenkontur der Schaufelfüße. Nach dem Stand der Technik unterscheidet man prinzipiell zwischen zwei Schaufelfußdesigns, nämlich zwischen dem Tannenbaumdesign und dem Schwalbenschwanzdesign.

Beim Tannenbaumdesign (Fir Tree Design) ist die Querschnittskontur des Schaufelfußes sowohl an einem in Drehrichtung der Laufschaufel vorn liegenden Bereich als auch an einem in Drehrichtung hinten liegenden Bereich durch eine wellenförmige Kontur gekennzeichnet, wobei Erhebungen dieser wellenförmigen Kontur an beiden Bereichen mehrere Verankerungszähne bilden. Eine entsprechende Ausnehmung innerhalb des Rotors bzw. der Rotorscheiben, in welchem die Laufschaufel mit dem Schaufelfuß einsteckbar ist, verfügt über eine korrespondierende, wellenförmige Kontur. Eine Laufschaufel mit einem derartigen Tannenbaumdesign ist zum Beispiel aus der DE 196 03 388 C1 bekannt.

Beim Schwalbenschwanzdesign (Dovetail Design) für einen Schaufelfuß hingegen ist die Querschnittskontur desselben dadurch gekennzeichnet, dass sich der Schaufelfuß von radial außen nach radial innen kontinuierlich verbreitert und dabei sowohl an dem in Drehrichtung vorn liegenden Bereich als auch an dem in Drehrichtung hinten liegenden Bereich des Schaufelfußes jeweils einen Verankerungszahn ausbildet.

Sowohl das Tannenbaumdesign als auch das Schwalbenschwanzdesign für einen Schaufelfuß einer Laufschaufel sind nach dem Stand der Technik dadurch gekennzeichnet, dass der Schaufelfuß symmetrisch ausgebildet ist, also an dem in Drehrichtung vorn liegenden Bereich und an dem in Drehrichtung hinten liegenden Bereich des Schaufelfußes eine gleiche Anzahl von Verankerungszähnen ausgebildet ist.

Hiervon ausgehend liegt der vorliegenden Erfindung das Problem zu Grunde eine neuartige Laufschaufel für eine Gasturbine sowie eine entsprechende Gasturbine zu schaffen.

Dieses Problem wird durch eine Laufschaufel für eine Gasturbine gemäß Patentanspruch 1 gelöst. Erfindungsgemäß ist der Schaufelfuß asymmetrisch ausgebildet ist, derart, dass einem in Drehrichtung der Laufschaufel vorn liegenden Bereich des Schaufelfußes mehr Verankerungszähne zugeordnet sind als einem in Drehrichtung der Laufschaufel hinten liegenden Bereich des Schaufelfußes.

Im Sinne der hier vorliegenden Erfindung wird ein asymmetrisches bzw. unsymmetrisches Schaufelfußdesign vorgeschlagen. Dieses zeichnet sich durch eine unterschiedliche Anzahl von Verankerungszähnen am in Drehrichtung vorn liegenden Bereich des Schaufelfußes sowie an dem in Drehrichtung hinten liegenden Bereich desselben aus. Die axiale Länge des Rotors wird dabei nicht verändert und somit auch nicht das Gewicht des Rotors. Dem in Drehrichtung vorn liegenden Bereich des Schaufelfußes ist eine größere Anzahl an Verankerungszähnen zugeordnet als dem in Drehrichtung hinten liegenden Bereich desselben. Durch ein derartiges, asymmetrisches Schaufelfußkonzept können während des Betriebs der Gasturbine und damit während der Rotation des Rotors und der Laufschaufel auftretende Zugspannungen deutlich verringert werden. Hierdurch werden die auf den Schaufelfuß wirkenden Belastungen reduziert und die Lebensdauer desselben erhöht.

Nach einer ersten vorteilhaften Weiterbildung der Erfindung ist der in Drehrichtung vorn liegende Bereich des Schaufelfußes im Tannenbaumdesign mit zwei Verankerungszähnen und der in Drehrichtung hinten liegende Bereich des Schaufelfußes im Schwalbenschwanzdesign mit einem Verankerungszahn ausgebildet.

Nach einer zweiten, alternativen vorteilhaften Weiterbildung der Erfindung ist der in Drehrichtung vorn liegende Bereich des Schaufelfußes im Tannenbaumdesign mit einer Anzahl N Verankerungszähnen und der in Drehrichtung hinten liegende Bereich des Schaufelfußes im Tannenbaumdesign mit einer Anzahl n Verankerungszähnen ausgebildet, wobei die Anzahl N größer ist als die Anzahl n.

Die erfindungsgemäße Gasturbine ist in Patentanspruch 7 definiert.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1: einen Schaufelfuß einer Laufschaufel nach dem Stand der Technik zusammen mit einem Ausschnitt aus einem Rotor im Querschnitt; und
- Fig. 2: einen Schaufelfuß einer erfindungsgemäßen Laufschaufel zusammen mit einem Ausschnitt aus einem Rotor im Querschnitt.

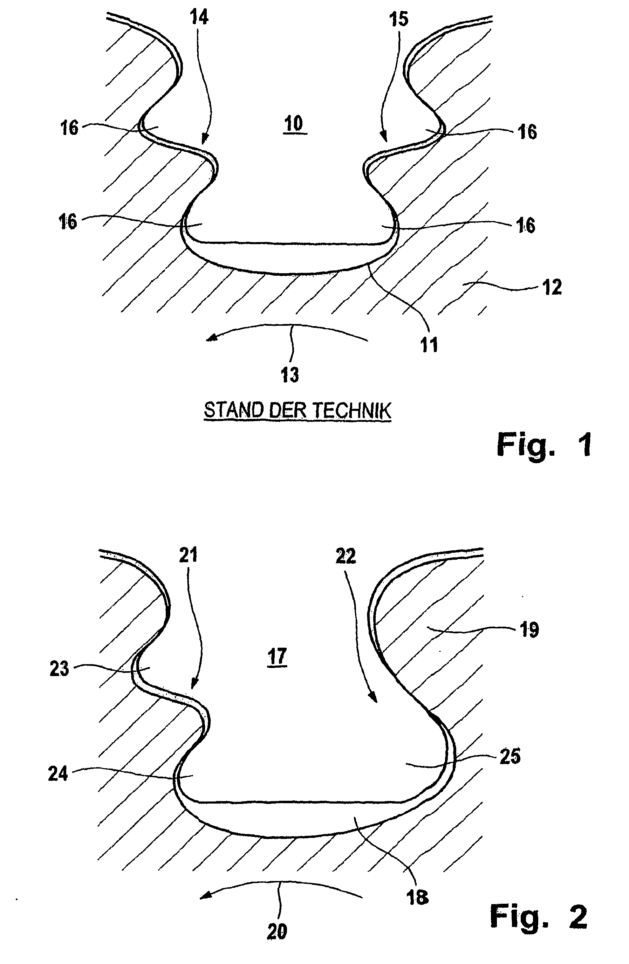

Bevor nachfolgend unter Bezugnahme auf Fig. 2 eine erfindungsgemäße Laufschaufel im Detail beschrieben wird, soll zuvor unter Bezugnahme auf Fig. 1 eine Laufschaufel nach dem Stand der Technik beschrieben werden.

So zeigt Fig. 1 einen Schaufelfuß 10 einer Laufschaufel nach dem Stand der Technik, wobei der Schaufelfuß 10 in einer Ausnehmung 11 eines Rotors 12 befestigt ist. Eine Drehrichtung des Rotors 12 und damit der Laufschaufel ist in Fig. 1 durch einen Pfeil 13 visualisiert.

Der Schaufelfuß 10 der in Fig. 1 dargestellten Laufschaufel nach dem Stand der Technik ist im sogenannten Tannenbaumdesign ausgeführt. So verfügt der Schaufelfuß 10 an einem in Drehrichtung (Pfeil 13) vorn liegenden Bereich 14 und an einem in Drehrichtung hinten liegenden Bereich 15 über jeweils zwei Verankerungszähne 16, die in die entsprechend konturierte Ausnehmung 11 innerhalb des Rotors 12 eingreifen und so die Laufschaufel über den Schaufelfuß 10 am Rotor 12 befestigen. Wie Fig. 1 entnommen werden kann, sind nach dem Stand der Technik dem in Drehrichtung (Pfeil 13) vorn liegenden Bereich 14 sowie dem in Drehrichtung hinten liegenden Bereich 15 des Schaufelfußes 10 eine gleiche Anzahl von Verankerungszähnen 16 zugeordnet. Im gezeigten Ausführungsbeispiel verfügt der Schaufelfuß nämlich an beiden Bereichen 14 und 15 über jeweils zwei Verankerungszähne 16.

Demgegenüber zeigt Fig. 2 eine erfindungsgemäß ausgebildete Laufschaufel, nämlich einen erfindungsgemäß ausgebildeten Schaufelfuß 17 derselben, der in einer Ausnehmung 18 eines Rotors 19 befestigt ist. Eine Drehrichtung des Rotors 19 und damit der Laufschaufel ist in Fig. 2 wiederum durch einen Pfeil 20 visualisiert.

Im Sinne der hier vorliegenden Erfindung ist der Schaufelfuß 17 einer erfindungsgemäß ausgebildeten Laufschaufel asymmetrisch bzw. unsymmetrisch ausgebildet. Einem in Drehrichtung (Pfeil 20) vorn liegenden Bereich 21 ist dabei eine unterschiedliche Anzahl von Verankerungszähnen zugeordnet wie einem in Drehrichtung hinten liegenden Bereich 22 des Schaufelfußes 17. Bei dem in Drehrichtung vorn liegenden Bereich 21 handelt es sich um die Saugseite, bei dem in Drehrichtung hinten liegenden Bereich um die Druckseite der Schaufel. Es liegt im Sinne der hier vorliegenden Erfindung, dem in Drehrichtung (Pfeil 20) vorn liegenden Bereich 21 eine größere Anzahl von Verankerungszähnen zuzuordnen als dem in Drehrichtung hinten liegenden Bereich 22 des Schaufelfußes 17. Eine derartige Ausgestaltung des Schaufelfußes trägt den bei der Rotation des Rotors 19 und damit der Laufschaufel auf die Laufschaufel wirkenden Kräfte Rechnung. So wirken bei der Rotation nämlich nicht nur in radialer Richtung wirkende Fliehkräfte auf die Laufschaufel und damit den Schaufelfuß 17 derselben ein, sondern auch in Umfangsrichtung wirkende Anströmkräfte sowie Trägheitskräfte. Mit dem erfindungsgemäßen Schaufelfußdesign wird dieser Erkenntnis Rechnung getragen und die auf den Schaufelfuß wirkenden Zugspannungen können deutlich reduziert werden. Der Schaufelfufß ist dann geringeren Belastungen ausgesetzt und verfügt über eine längere Lebenszeit.

Nach einer bevorzugten Ausführungsform der hier vorliegenden Erfindung, die in Fig. 2 dargestellt ist, ist der Schaufelfuß 17 an dem in Drehrichtung vorn liegenden Bereich 21 im Tannenbaumdesign mit zwei Verankerungszähnen 23 und 24 und an dem in Drehrichtung hinten liegenden Bereich 22 im Schwalbenschwanzdesign mit einem Verankerungszahn 25 ausgebildet. Demnach verfügt der Schaufelfuß 17 am in Drehrichtung vorn liegenden Bereich 21 über zwei Verankerungszähne 23 und 24 und am in Drehrichtung hinten liegenden Bereich 22 über einen Verankerungszahn 25. Diese Ausführung des Schaufelfußes 17 ist besonders bevorzugt.

Im Unterschied zum gezeigten Ausführungsbeispiel ist es auch möglich, den in Drehrichtung vorn liegenden Bereich im Tannenbaumdesign mit drei Verankerungszähnen und den in Drehrichtung hinten liegenden Bereich des Schaufelfußes im Schwalbenschwanzdesign mit einem Verankerungszahn auszubilden.

Weiterhin ist es möglich, den in Drehrichtung vorn liegenden Bereich des Schaufelfußes im Tannenbaumdesign mit einer Anzahl N Verankerungszähnen und den in Drehrichtung hinten liegenden Bereich des Schaufelfußes ebenfalls im Tannenbaumdesign mit einer Anzahl n Verankerungszähnen auszubilden, wobei die Anzahl N größer ist als die Anzahl n. Die Anzahl n kann zum Beispiel N-1 oder N-2 sein.

Im Sinne der hier vorliegenden Erfindung wird demnach eine Laufschaufel mit einem asymmetrisch ausgebildeten Schaufelfuß bereitgestellt. Der Schaufelfuß verfügt hierzu an einem in Drehrichtung vorn liegenden Bereich über eine größere Anzahl von Verankerungszähnen als an einem in Drehrichtung hinten liegenden Bereich desselben. Der in Drehrichtung vorn liegenden Bereich kann im Tannenbaumdesign und der in Drehrichtung hinten liegende Bereich im Schwalbenschwanzdesign ausgeführt sein. Auch ist es möglich, beide Bereiche im Tannenbaumdesign auszuführen, wobei dann der in Drehrichtung vorn liegende Bereich wiederum über eine größere Anzahl von Verankerungszähnen verfügt als der in Drehrichtung hinten liegende Bereich des Schaufelfußes.

Bei der erfindungsgemäßen Laufschaufel kann es sich um eine Laufschaufel für eine Turbine oder einen Verdichter einer Gasturbine, vorzugsweise eines Flugtriebwerks, handeln. Auch kann die Erfindung in stationären Gasturbinen oder Dampfturbinen oder auch sonstigen Turbinen zur Energieerzeugung zum Einsatz kommen.

## Patentansprüche

1. Laufschaufel, insbesondere für eine Gasturbine, mit einem Schaufelblatt und einem Schaufelfuß (17), wobei die Laufschaufel über den Schaufelfuß (17) an einem Rotor (19) befestigbar bzw. in demselben verankerbar ist,
**dadurch gekennzeichnet,**
**dass** der Schaufelfuß (17) asymmetrisch ausgebildet ist, derart, dass einem in Drehrichtung der Laufschaufel vorn liegenden Bereich (21) des Schaufelfußes (17) mehr Verankerungszähne zugeordnet sind als einem in Drehrichtung der Laufschaufel hinten liegenden Bereich (22) des Schaufelfußes (17).

2. Laufschaufel nach Anspruch 1,
**dadurch gekennzeichnet,**
**dass** der in Drehrichtung vorn liegende Bereich (21) des Schaufelfußes (17) eine Anzahl N Verankerungszähne (23, 24) und der in Drehrichtung hinten liegenden Bereich (22) des Schaufelfußes (17) eine Anzahl n Verankerungszähne (25) aufweist, wobei die Anzahl N größer ist als die Anzahl n.

3. Laufschaufel nach Anspruch 1 oder 2,
**dadurch gekennzeichnet,**
**dass** der in Drehrichtung vorn liegende Bereich (21) des Schaufelfußes (17) im Tannenbaumdesign mit zwei Verankerungszähnen (23, 24) und der in Drehrichtung hinten liegende Bereich (22) des Schaufelfußes (17) im Schwalbenschwanzdesign mit einem Verankerungszahn (25) ausgebildet ist.

4. Laufschaufel nach Anspruch 1 oder 2,
**dadurch gekennzeichnet,**
**dass** der in Drehrichtung vorn liegende Bereich des Schaufelfußes im Tannenbaumdesign mit einer Anzahl N Verankerungszähnen und der in Drehrichtung hinten liegende Bereich des Schaufelfußes im Tannenbaumdesign mit einer Anzahl N-1 Verankerungszähnen ausgebildet ist.

5. Laufschaufel nach Anspruch 1 oder 2,
**dadurch gekennzeichnet,**
**dass** der in Drehrichtung vorn liegende Bereich des Schaufelfußes im Tannenbaumdesign mit einer Anzahl N Verankerungszähnen und der in Drehrichtung hinten liegende Bereich des Schaufelfußes im Tannenbaumdesign mit einer Anzahl N-2 Verankerungszähnen ausgebildet ist.

6. Laufschaufel nach einem oder mehreren der Ansprüche 1 bis 5,
**dadurch gekennzeichnet,**
**dass** die Laufschaufel als Turbinenlaufschaufel oder Verdichterlaufschaufel ausgebildet ist.

7. Gasturbine, insbesondere Flugtriebwerk, mit mindestens einem Rotor und dem oder jedem Rotor zugeordneten Laufschaufeln, wobei die oder jede Laufschaufel über einen Schaufelfuß an dem oder jedem Rotor befestigt sind,
**dadurch gekennzeichnet,**
**dass** die oder jede Laufschaufeln nach einem oder mehreren der Ansprüche 1 bis 6 ausgebildet ist.

## Claims

1. Rotor blade, in particular for a gas turbine, with an airfoil and with a blade base (17) such that the rotor blade can be attached by means of its blade base (17) to a rotor (19) or anchored therein,
**characterised in that**
the blade base (17) is formed asymmetrically such that in a rotationally leading area (21) of the rotor blade there are more anchoring teeth than in a rotationally trailing area (22) of the blade base (17).

2. Rotor blade according to Claim 1,
**characterised in that**
the rotationally leading area (21) of the blade base (17) has a number N of anchoring teeth (23, 24) and the rotationally trailing area (22) of the blade base (17) has a number n of anchoring teeth (25), the number N being larger than the number n.

3. Rotor blade according to Claims 1 or 2,
**characterised in that**
the rotationally leading area (21) of the blade base (17) is made in the fir-tree design with two anchoring teeth (23, 24) and the rotationally trailing area (22) of the blade base (17) is made in the dovetail design with one anchoring tooth (25).

4. Rotor blade according to Claims 1 or 2,
**characterised in that**
the rotationally leading area of the blade base is made in the fir-tree design with a number N of anchoring teeth and the rotationally trailing area of the blade base is made in the fir-tree design with a number N-1 of anchoring teeth.

5. Rotor blade according to Claims 1 or 2,
**characterised in that**
the rotationally leading area of the blade base is made in the fir-tree design with a number N of anchoring teeth and the rotationally trailing area of the blade base is made in the fir-tree design with a number N-2 of anchoring teeth.

6. Rotor blade according to one or more of Claims 1 to 5,
**characterised in that**
the rotor blade is made as a rotor blade for a turbine or a compressor.

7. Gas turbine, in particular an aircraft engine, with at least one rotor and with rotor blades associated with the rotor(s), such that the or each rotor blade is attached to the or each rotor by means of a blade base,
**characterised in that**
the or each rotor blade is made according to one or more of Claims 1 to 6.

## Revendications

1. Aube mobile, notamment pour une turbine à gaz, avec une pale et un pied de pale (17), ladite aube mobile étant fixable par son pied de pale (17) sur un rotor (19), ou ancrable dans celui-ci, **caractérisée en ce que** le pied de pale (17) est conformé asymétriquement, de telle manière qu'une zone (21) du pied de pale (17), antérieure dans le sens de rotation de l'aube mobile, comporte plus de dents d'ancrage qu'une zone (22) du pied de pale (17), postérieure dans le sens de rotation de l'aube mobile.

2. Aube mobile selon la revendication 1, **caractérisée en ce que** la zone (21) du pied de pale (17), antérieure dans le sens de rotation, comporte un nombre N de dents d'ancrage (23, 24), et la zone (22) du pied de pale (17), postérieure dans le sens de rotation, un nombre n de dents d'ancrage (25), le nombre N étant supérieur au nombre n.

3. Aube mobile selon la revendication 1 ou la revendication 2, **caractérisée en ce que** la zone (21) du pied de pale (17), antérieure dans le sens de rotation, est conformée en sapin avec deux dents d'ancrage (23, 24), et la zone (22) du pied de pale (17), postérieure dans le sens de rotation, en queue d'aronde avec une seule dent d'ancrage (25).

4. Aube mobile selon la revendication 1 ou la revendication 2, **caractérisée en ce que** la zone du pied de pale, antérieure dans le sens de rotation, est conformée en sapin avec un nombre N de dents d'ancrage, et la zone du pied de pale, postérieure dans le sens de rotation, en sapin avec un nombre N-1 de dents d'ancrage.

5. Aube mobile selon la revendication 1 ou la revendication 2, **caractérisée en ce que** la zone du pied de pale, antérieure dans le sens de rotation, est conformée en sapin avec un nombre N de dents d'ancrage, et la zone du pied de pale, postérieure dans le sens de rotation, en sapin avec un nombre N-2 de dents d'ancrage.

6. Aube mobile selon l'une ou plusieurs des revendications 1 à 5, **caractérisée en ce que** ladite aube mobile est réalisée comme aube mobile de turbine ou aube mobile de compresseur.

7. Turbine à gaz, en particulier moteur d'avion, avec au moins un rotor et des aubes mobiles associées audit rotor ou à chaque rotor, la ou les aubes mobiles étant fixées par le pied de pale sur le ou les rotors, **caractérisée en ce que** la ou les aubes mobiles sont.réalisées selon l'une ou plusieurs des revendications 1 à 6.
